# EUROPEAN PATENT SPECIFICATION

(11) **EP 4 495 018 B1**
(45) Date of publication and mention of the grant of the patent: **04.02.2026**
(21) Application number: 24187970.9
(22) Date of filing: 11.07.2024
(51) Int. Cl.: B65B 7/28, B65B 61/18, B65B 65/00, B65B 65/02, B65G 47/28, B65G 54/02, B65B 51/02, B65B 57/04

(54) **CAP APPLICATOR SYSTEM FOR A PACKAGING MACHINE AND METHOD FOR APPLYING CAPS**
KAPPENAPPLIKATORSYSTEM FÜR EINE VERPACKUNGSMASCHINE UND VERFAHREN ZUM ANBRINGEN VON KAPPEN
SYSTÈME D'APPLICATEUR DE CAPUCHON POUR UNE MACHINE D'EMBALLAGE ET PROCÉDÉ D'APPLICATION DE CAPUCHONS

(30) Priority: 18.07.2023 IT 202300015081
(43) Date of publication of application: 22.01.2025
(73) Proprietor: Tetra Laval Holdings & Finance S.A., 1009 Pully (CH)
(72) Inventor: BASSISSI, Fabio, 41123 MODENA (IT); SACCHETTI, Elena, 41123 MODENA (IT); CALTABIANO, Daniele, 41123 MODENA (IT); PICCININI, Giorgio, 41123 MODENA (IT)
(74) Representative: Tetra Pak Patent Attorneys

(56) References cited:
- EP-A1- 2 746 175
- EP-A1- 3 882 164
- EP-A1- 4 071 569
- CN-U- 218 890 845
- US-A1- 2001 032 438

## Description

### TECHNICAL FIELD

The present invention relates to a cap applicator system for applying caps onto packages containing a pourable product, preferably a pourable food product.

In particular, the present invention will refer, without however losing on generality, to a cap applicator system for a packaging line configured for producing said packages containing a pourable product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging lines, which comprise packaging machines configured to form and fill the packages starting from a multilayer packaging material.

In particular, in a non-limiting example of packaging machines a continuous tube is formed starting from a web of packaging material initially wound in a reel and fed through a plurality of unwinding rollers. The web of packaging material is sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding unit.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction.

In order to perform the forming and sealing operations, the known packaging machines comprise a forming unit configured to form the tube, so as to imprint an external shape to it corresponding to the desired shape of the package, and a sealing unit configured to seal the tube at equally spaced cross-sections orthogonal to the tube advancement direction.

Generally, a packaging machine of the above type comprises a pair of alternately movable forming and sealing jaws which are controllable with a reciprocating movement in the first direction and in a third direction orthogonal to the first direction and second direction to interact with the tube at successive portions thereof.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

Once the cutting operation is complete, the sealing unit and the forming unit are moved to be ready to grip another subsequent portion of the tube.

The finished packages are thereby obtained.

Packages are known which are provided with a so called "prelaminated hole" (or PLH), which essentially consists of a hole obtained in the base layer (e.g. in the paper layer) and covered, or closed, by the oxygen-barrier layer (e.g. the aluminum layer). More specifically, the hole is obtained in the base layer only, leaving the oxygen-barrier layer intact. Hence, initially, the PLH is closed and sealed and successively has to be pierced in order to provide access to the product contained in the package.

Such type of packages are provided with a cap or closure or opening device, which is to be applied onto the PLH, in order to define a cap and/or a pouring spout of the package itself. In some known configurations, the first opening of the cap also causes the aforementioned piercing of the PLH.

In light of the above, the known packaging lines further comprise a cap applicator system for applying caps onto the finished packages, precisely at their respective PLH.

A cap applicator system of the aforementioned type is known from WO201409275. Such cap applicator system entails the use of a linear motor of the known type.

In detail, the cap applicator system comprises:
- an endless track system equipped with individually and selectively excitable solenoids, i.e. inductive coils which are powerable with electric current;
- a plurality of cart members which are provided with permanent magnets, are slidably coupled to the track system and are independently movable from one another along the track system;
- a cap receiving station, at which each cart member receives and grips a respective cap;
- a gluing station, at which each gripped cap is spread with glue;
- an application station, at which each cart member applies the gripped and glued cap onto a package being advanced by a conveyor.

Each cart member comprises a gripper for receiving and holding a respective cap.

The resulting linear motor is configured to independently control, in a known manner, the advancement of the cart members along the track system and through the aforementioned stations.

It is known the need for providing the gripper of each cart member with the possibility of moving transversally with respect to the advancement direction along the track or orthogonally outwards with respect to such advancement direction.

For the purpose of producing the aforesaid transversal motion of the gripper, the track system described in WO201409275 includes two endless closed-loop tracks, which are laterally adjacent and extend parallel to one another, and each cart member includes a pair of associated carts, each coupled to a respective track.

The carts are coupled to one another by means of a known lever mechanism. According to a manner known and described in WO201409275, such lever mechanism causes, by means of a relative movement of the pair of carts along the two tracks, the aforesaid transversal motion of the gripper.

This has the twofold function of: adapting the application position of the cap to the real position of the PLH of the respective package (in fact the position of the PLH may slightly differ, within a certain tolerance, from the nominal one), thereby allowing a positioning correction; and providing the gripper, and therefore the cap, with the rotating motion necessary to be correctly spread with glue at the gluing station, in a known manner and by means of a composite relative movement of the pair of carts along the respective tracks.

For the purpose of producing the aforesaid orthogonal motion of the gripper, each cart member is equipped with a cam follower configured to interact with a cam surface of the cap applicator device, in a manner known described in WO201409275. Such interaction provides for a translation in a direction orthogonal with respect to the advancement direction along the track, thereby allowing for a better picking and application of the respective cap.

In light of the above, it is evident that the known cap applicator systems entail a large number of components, the functioning of which is rather cumbersome and complicated.

Hence, although being structurally and functionally valid, the Applicant has observed that the cap applicator devices of the known type are still open to further improvements, in particular as per their number of components, their flexibility in terms of package and/or cap format change, their reliability, their architecture, the wear of the components, their ease of maintenance and their overall cost.

EP 2 746 175 A1 discloses a cap applicator system for applying caps onto packages containing a pourable product, the system comprising an endless track; a plurality of cart members movably coupled with the endless track, a motor configured to move the cart members along the endless track, each cart member being configured to cyclically receive one respective cap at a receiving station to retain and convey such cap along the endless track, and to apply such cap onto one respective package at an application station.

### DISCLOSURE OF INVENTION

It is therefore an object of the present invention to provide a cap applicator system configured for applying caps onto packages containing a pourable product, which is designed to meet at least one of the above-mentioned needs in a straightforward and low-cost manner.

This object is achieved by a cap applicator system as claimed in claim 1 and a method as defined in claim 16

### BRIEF DESCRIPTION OF THE DRAWINGS

A non-limiting embodiment of the present invention will be described by way of example with reference to the accompanying drawings, in which:
Figure 1 is a schematic side view of a cap applicator system according to the present invention, with parts removed for clarity;
Figure 2 is a larger-scale, schematic side view, with parts removed for clarity, of a cart of the cap applicator system of Figure 1 interacting with a track of the cap applicator system of Figure 1, during a first operative condition; and
Figure 3 is a larger-scale, schematic side view, with parts removed for clarity, of the cart and track of Figure 2 during a second operative condition.

### BEST MODE FOR CARRYING OUT THE INVENTION

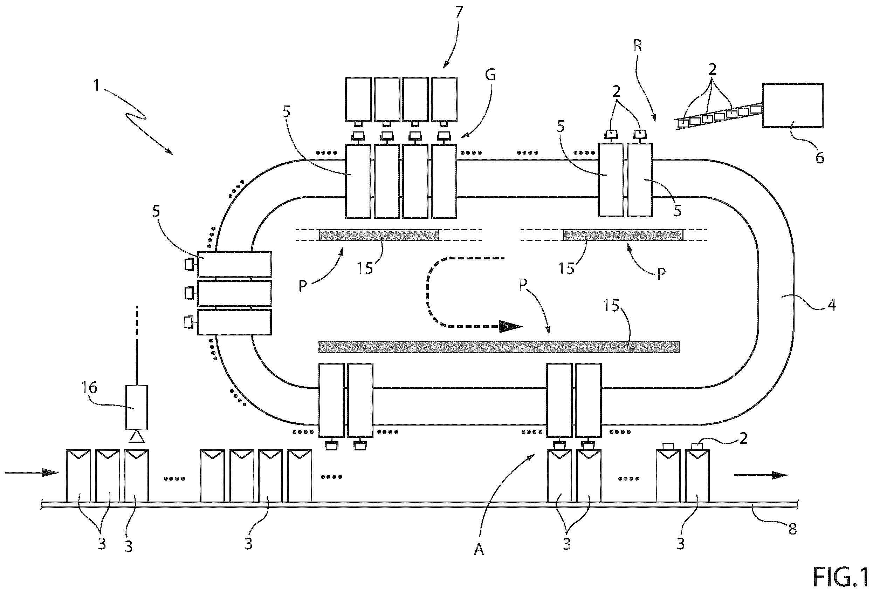

With reference to Figure 1, number 1 indicates as a whole a non-limiting example of a cap applicator system for applying caps 2 to packages 3 containing a pourable product, preferably a pourable food product such as pasteurized or UHT milk, water, fruit juice, wine, peas, beans, etc.

In particular, the present description will refer, without however losing on generality, to a cap applicator system 1 which is part of a packaging line (known per se and not shown) comprising a packaging machine configured for producing a plurality of packages 3 in a known manner.

As a non-limiting example, the packaging machine is configured for forming, sealing and folding packages 3 starting from a tube of packaging material, in a manner known and not described in detail.

To this end, the packaging machine comprises:
- a filling device (not shown) for filling the tube with the pourable product;
- a forming and sealing device (not shown) for forming and sealing the tube, thereby obtaining a plurality of pillow packs, according to a manner known and not described in detail; and
- a folding device (not shown) for folding the pillow packs, thereby obtaining said packages 3, according to a manner known and not described in detail.

Hence, the packaging machine is configured to form and seal a plurality of pillow packs containing the pourable product starting from the tube and then to fold the pillow packs for obtaining the aforementioned formed, sealed and folded packages 3 containing the pourable product.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 3 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 3 eventually contacting the pourable product.

Preferably, without however losing generality, system 1 is configured to apply caps 2 made of plastic material.

Each package 3 includes a so-called prelaminated hole or PLH which is of the type described above in the introductory portion of the description.

Cap applicator system 1 is configured to sequentially apply each cap 2 onto a respective PLH, so as to cover and overlap the PLH.

In one embodiment, each cap 2 may also provide for the first piercing of the oxygen-barrier layer of the PLH, according to a manner known and not described in detail.

According to a preferred embodiment, cap applicator system 1 is configured to receive packages 3 from the folding device.

As schematically shown in Figure 1, cap applicator system 1 essentially comprises:
- an endless track 4;
- a plurality of carts 5 movably coupled with track 4;
- a linear motor configured to move carts 5 along track 4 selectively and independently from one another.

In detail, linear motor incudes a plurality of individually-excitable (with electrical energy) solenoids or inductive coils distributed along track 4, whereas each cart 5 includes at least one permanent magnet. The electromagnetic interaction between the coils and the permanent magnets produces the motion of carts 5 along track 4, in a manner known and not described in detail.

Cap applicator system 1 further comprises (Figure 1) one or more of:
- a cap feeder 6 arranged along track 4, defining a receiving station R and configured to feed caps 2 to carts 5 transiting through receiving station R, respectively;
- a gluing device 7 arranged along track 4 in a position operatively downstream of cap feeder 6, defining a gluing station G and configured to spread glue onto caps 2 conveyed therethrough by the respective carts 5; and
- an application station A arranged along track 4 in a position operatively downstream of gluing device 7 and at which carts 5 cooperate with packages 3 for applying the respective caps 2 thereon.

Accordingly, a sequence of packages 3 is advanced, in use, at application station A.

More specifically, cap applicator system 1 may comprise a conveyor 8, e.g. a belt conveyor, extending through application station A and configured to convey packages 3 at and through application station A, so as to undergo the cap application as explained above.

In light of the above each cart 5 is configured to cyclically receive one respective cap 2 from cap feeder 6 at receiving station R, to retain and convey such cap 2 along track 4 and through gluing station G whereby gluing device 7 spreads glue thereon, and to apply such cap 2 onto one respective package 3 at application station A.

To this end, track 4 expediently extends through receiving station R, gluing station G and application station A.

After the cap application, each cart 5 completes the length of the endless track 4 and goes back at receiving station R, for performing another cap application cycle.

For the sake of brevity, reference will be made in the following to a single cart 5. The structural and functional features described in connection therewith are applicable to each cart 5 of cap applicator system 1.

According to a first aspect of the present invention, cart 5 comprises at least one electrically-powerable component 10 and a receiver 11 configured for receiving electrical energy and powering component 10.

According to a second aspect of the present invention, cap applicator system 1 comprises a powering station P arranged along track 4 and configured for transmitting electrical energy.

According to a third aspect of the present invention, the linear motor is configured to selectively move cart 5 through powering station P, whereby receiver 11 receives electrical energy from powering station P thereby powering component 10.

In particular, upon passage or transiting of cart 5 through powering station P, receiver 11 interacts with powering station P (which for example may comprise a suitable transmitter for transmitting the electrical energy), thereby receiving electrical energy with which it powers component 10. For example, the powering station P may generate an electromagnetic field which may induce a current in the receiver 11.

It is specified that, according to the invention, powering station P is electrically separated from the solenoids or inductive coils of track 4, and more generally electrically separated and distinct from the linear motor.

In light of the above, each cart 5 can gather electrical energy for powering an electrically-powerable component 10 thereof in a relatively simple manner and without interfering with the electric powering of the cart 5 itself by means of the linear motor.

According to the non-limiting embodiment shown, cart 5 includes a gripping unit 12 which is configured to cyclically grip at least one cap 2, in particular one single cap 2, at receiving station R, to retain such cap 2 during advancement of cart 5 along track 4, and to release cap 2 at application station A (opportunely after cap 2 has been spread with glue at gluing station G).

According to the invention, electrically-powerable component 10 comprises said gripping unit 12.

In particular, gripping unit 12 comprises:
- a gripper 13 for cyclically retaining a respective cap 2 between receiving station R, at which gripper 13 receives and grips such cap 2, and application station A, at which gripper releases and applies cap 2 onto a respective package 3; and
- an actuator 14 (of the type known and only schematically shown for the purposes of the present invention) for driving a movement of gripper 13 relatively to cart 5 during the advancement of such cart 5 along track 4.

Actuator 14 may include an electric motor. Actuator 14 may include suitable gears and/or transmission means for mechanical coupling with gripper 13.

According to the invention, receiver 11 is electrically coupled with actuator 14, and is configured for powering actuator 14 with electrical energy received from powering station P.

More specifically, actuator 14 may be configured for driving:
- a movement of gripper 13 relatively to cart 5 along a first direction Y parallel to track 4; and/or
- a movement of gripper 13 relatively to cart 5 along a second direction X transversal to track 4; and/or
- a movement of gripper 13 relatively to cart 5 along a third direction Z orthogonal to track 4 and directed outwardly with respect to track 4 itself; and/or
- a composite motion of the above movements; and/or
- a rotation of the cap about its own axis.

More precisely, first direction Y is defined as being parallel to track 4 along its entire length; second direction X is defined as being orthogonal to track 4 and to first direction Y; and third direction Z is defined as being orthogonal to track 4 and to first direction Y and second direction X and directed outwardly with respect to track 4 itself.

According to the invention, actuator 14 is powerable by means of powering station P, i.e. by means of cart 5 passing through powering station P and by means of receiver 11 receiving thereby electrical energy from powering station P.

In other words, cap applicator system 1 according to the present invention allows to obtain a "power on board" configuration.

Thanks to the above configuration, a movement of cap 2 with respect to its initial gripping position and with respect to track 4 can be easily obtained exploiting the "power on board" provided by powering station P, without the need for an additional track 4 and a pair of carts 5 coupled with a lever mechanism for each cap 2 to be gripped and conveyed, as it is the case for the systems according to the state of the art.

Accordingly, track 4 is advantageously defined by a single closed-loop rail, and each cart 5 comprises only one single cart movably coupled to the closed-loop rail.

In this way, an adjustment of the position of each cap 2 can be easily obtained, without involving a second track 4 or pairs of kinematically coupled carts 5, thereby reducing the number of components of system 1, increasing its reliability and easing the maintenance thereof.

Furthermore, the necessary rotating motion for correctly spreading glue onto each cap 2 at gluing station G may be easily provided thanks to the "power on board" configuration according to the invention.

As schematically shown in Figures 1, 2 and 3, powering station P comprises an energizing track 15 which extends along at least part of track 4.

According to the invention, cart 5 is configured to advance the respective receiver 11 along energizing track 15 for interacting therewith and being thus energized with electrical energy.

In practice, powering station P is defined by energizing track 15.

Expediently, energizing track 15 extends at least at receiving station R and at application station A.

Conveniently, energizing track 15 extends also at gluing station G.

In this way, cart 5 may receive power from energizing track 15 (i.e. from powering station P) for energizing component 10, and particularly actuator 14, at said stations R, G, A, and thereby driving a movement of gripper 13, and therefore of the respective cap 2, at said stations.

In other words, powering station P preferably has a discontinuous configuration, comprising a discontinuous energizing track 15 which extends only at stations R, G, A.

It may be said that several powering stations P and thus energizing tracks 15 are present in system 1, or that energizing track 15 has several portions along track 4.

In this way, cart 5 guarantees the desired degrees of freedom to gripper 13, and therefore to cap 2, at receiving station R, gluing station G and application station A, by means of actuator 14 powered with energizing track 15, whereas when such degrees of freedom are not needed (e.g. in between these stations R, G, A) energizing track 15 is absent.

Number of components and the overall costs associated with system 1 can therefore be maintained low.

Moreover, system 1 may acquire a highly increased flexibility in terms of positioning of cap feeder 6, gluing device 7 and application station A, simply by displacing the various portions of energizing track 15 as desired.

Furthermore, wear is highly reduced, since mechanical contacts between cams and cam followers are reduced in number.

Also flexibility of system 1 in terms of format change is highly increased: it is in fact sufficient to appropriately control the extent of the aforesaid movement (e.g. by means of a suitable control unit and within the stroke limits of actuator 14) to rapidly and easily adjust the position of cap 2 to different types of packages 3 and/or the position of gripper 13 to different types of caps 2.

Some examples of the aforementioned movements drivable by means of system 1 are presented hereinafter.

For example, actuator 14 may be powered at receiving station R to drive a translational movement of gripper 13 towards cap feeder 6, for better picking cap 2 and/or adapting to different cap formats.

For example, actuator 14 may be powered at gluing station G to drive a rotational movement of gripper 13 being a composition of translations, thereby imparting to the gripped cap 2 the necessary rotation motion for being spread with glue.

For example, actuator 14 may be powered upstream of application station A to drive a translational and/or rotational movement of gripper 13, thereby adjusting a positioning of cap 2 adapting to the real position of the PLH on the respective package 3.

To this end, cap applicator system 1 may further comprise a detector 16 arranged facing conveyor 8 upstream of application station A for detecting the positioning of each PLH on packages 3, with respect to a nominal positioning.

Each detection is then logically provided to the respective cart 5, which will therefore adjust the position of cap 2 accordingly, thanks to the configuration according to the present invention.

In this regard, it is specified that powering station P is further configured to transmit to each receiver 11 logic information (i.e. control information or controls) through the electrical energy.

Accordingly, each cart 5 is conveniently equipped with a control unit (of the known type) configured for receiving the logic information or control information from powering station P, and to control component 10 accordingly.

Finally, for example actuator 14 may be powered at application station A to drive a translational movement of gripper 13, for better application of cap 2 onto package 3 and thereby imparting a pressing action of cap 2 onto package 3 which may improve the application thereon.

In light of the above, cap applicator system 1 comprises a plurality of powering stations P, each one located at a respective station R, G, A.

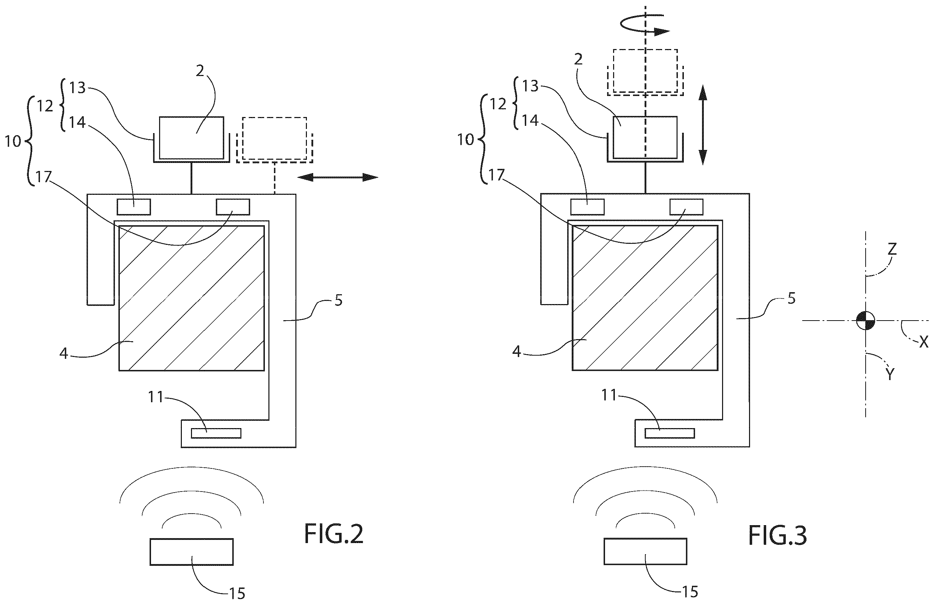

Conveniently, as schematized in Figures 2 and 3, powering station P is configured for transmitting electrical energy to receiver 11 of each cart 5 by means of wireless power transfer.

In practice, as visible in Figures 2 and 3, there is a space between energizing track 15 and each receiver 11, so that there is no physical contact between them.

This allows for a substantial reduction of wear due to contactless interaction between these two parts.

Preferably, energizing track 15 includes a first electric circuit and receiver 11 includes a second electric circuit. The transmission of electrical energy from the first electric circuit to the second electric circuit occurs by means of electrical induction, thereby defining the wireless transfer (i.e. the wireless electrical connection).

Alternatively, energizing track 15 and receiver 11 may cooperate in sliding contact with one another, for example by means of electrically conductive brushes. In this case, the transfer of electrical energy may be more effective and with less dispersions, albeit entailing an increased wear with respect to the aforesaid wireless transfer.

In one embodiment, gripper 13 may be controllable in an open configuration, for receiving or releasing the respective cap 2, and in a closed configuration, for gripping and retaining the respective cap 2.

Advantageously, actuator 14 may be configured for controlling gripper 13 between the open configuration and the closed configuration.

In this way, powering station P may also provide the control and driving necessary for actively gripping and releasing cap 2, thereby avoiding the need for further dedicated cam systems at receiving station R and application station A.

According to an alternative embodiment not shown, gripping unit 12 may comprise:
- a vacuum pump (of the known type and not shown);
- a gripper for cyclically retaining a respective cap 2 between receiving station R and application station A, the gripper having a vacuum port fluidly connectable to the vacuum pump for retaining cap 2 by suction.

Accordingly, receiver 11 may be configured for powering the vacuum pump with electrical energy received from powering station P.

It is thus clear that the "power on board" configuration of system 1 according to the invention allows for an easy, simple and rather flexible powering and control of various electrically-powerable devices and components.

In this regard, according to an alternative embodiment not shown, each cart 5 includes at least one sensor 17 configured to detect a physical quantity indicative of the cap 2 received by cart 5 or of the cart 5 itself. Sensor 17 may be embedded in a frame or body of cart 5.

As an example, sensor 17 may be configured to detect one or more of the following:
- a position of cap 2 relative to cart 5;
- a presence of cap 2 on cart 5;
- a nominal gripping of cap 2 by cart 5, i.e. by gripper 13;
- a weight of cap 2;
- an orientation of cap 2;
- an acceleration of cart 5;
- a speed of cart 5.

According to the invention, the aforesaid electrically-powerable component 10 comprises sensor 17.

Accordingly, receiver 11 is configured for powering sensor 17 with electrical energy received from powering station P, i.e. from energizing track 15.

For example, during the passage of cart 5 through receiving station R, and the related powering station P, sensor 17 is powered (via receiver 11) for detecting a weight of the cap 2 received or an orientation of such cap 2.

In this way, a simple and effective electric powering of a sensor 17 on cart 5 may be obtained, without interfering with the linear motor and without the need for complicated electrical energy transmission system, which would be incompatible with the linear motor (such as cables or other complicated and/or cumbersome means).

Conveniently, cap applicator system 1 includes a control unit which is configured to (individually) control each cart 5. The control unit of the cap applicator system 1 may be configured to logically communicate (i.e. to electronically exchange information) with the aforementioned control units of each cart 5.

Hence, a wireless communication between such control units can be easily established, by means of which the control unit of cap applicator system 1 can remotely control the actuation of component 10 (i.e. of gripping unit 12 and/or sensor 17).

Advantageously, each cart 5 includes an electrical energy storage member (not shown), such as a battery, electrically connected with receiver 11 and with component 10 (i.e. with actuator 14 and/or sensor 17) and configured to store electrical energy supplied from receiver 11, in particular for a predetermined amount of time, and to supply the stored electrical energy to component 10.

Only one powering station P may be present, for example at receiving station R, since the storage member may provide electrical energy to component 10 throughout all the application cycle.

In other words, component 10 may be cyclically powered only once by interaction of receiver 11 with the single powering station P. As a result, an even more reduced wear and an even more simplified architecture may be obtained.

From the foregoing description, it is clear how cap applicator system 1 according to the invention allows to implement a method for applying caps 2 onto packages 3 containing a pourable product, the method comprising the steps of:
- advancing a plurality of packages 3 through an application station A;
- advancing a plurality of carts 5 along an endless track 4 and through a receiving station R and the application station A by means of a linear motor, each cart 5 including at least one electrically-powerable component 10 and a receiver 11 for receiving electrical energy and powering the component 10;
- conveying caps 2 from the receiving station R to the application station A by means of the carts 5, respectively;
- selectively moving each cart 5 through a powering station P configured for transmitting electrical energy;
- transmitting electrical energy to each receiver 11 by means of the powering station P and upon transiting of the respective cart 5 through the powering station P;
- powering the component 10 with the electrical energy received from the powering station P.

The advantages of cap applicator system 1 according to the present invention will be clear from the foregoing description.

The powering station P may comprise a portion of the endless track where wireless power transfer is possible. That is, the cart 5 transits through the powering station at which it is possible for it to receive electrical power.

In particular, a relatively simple, reliable, flexible, safe and wearproof cap applicator system 1 for applying caps 2 onto packages 3 containing pourable product is obtained.

In fact, wear is substantially reduced, thanks to the linear motor and thanks to the fact that receivers 11 and energizing tracks 15 preferably interact with one another with little or no contact.

Moreover, the number of components of system 1 is highly reduced with respect to the known systems: only a single track 4 and single carts 5 instead of pairs of kinematically linked carts are sufficient for obtaining the desired movements of gripper 13 and caps 2.

Accordingly, the need for maintenance and overall cost of system 1 are significantly reduced.

Furthermore, a sensor 17 may be implemented on each cart 5 and very easily powered by the "power on board" configuration of system 1 according to the invention.

In addition, thanks to such "power on board" configuration, flexibility of system 1 in terms of package and/or cap format change is highly increased.

Clearly, changes may be made to cap applicator system 1 as described herein without, however, departing from the scope of protection as defined in the accompanying claims.

In particular, each cart 5 may include only one of the gripping unit 12 and the sensor 17 or both the gripping unit 12 and the sensor 17.

That is, the electrically-powerable component 10 may comprise, and in particular may be defined, by one or both of the above.

## Claims

1. Cap applicator system (1) for applying caps (2) onto packages (3) containing a pourable product, the cap applicator system (1) comprising:
- an endless track (4);
- a plurality of cart members (5) movably coupled with the endless track (4), each cart member (5) having at least one electrically-powerable component (10) and a receiver (11) configured for receiving electrical energy and powering the component (10);
- a linear motor configured to move the cart members (5) along the endless track (4) selectively and independently from one another, each cart member (5) being configured to cyclically receive one respective cap (2) at a receiving station (R), to retain and convey such cap (2) along the endless track (2), and to apply such cap (2) onto one respective package (3) at an application station (A); and
- at least one powering station (P) arranged along at least a portion of the endless track (4) and configured for transmitting electrical energy;
wherein the linear motor is configured to selectively move each cart member (5) through the powering station (P), whereby the receiver (11) receives electrical energy from the powering station (P) thereby powering the component (10).

2. Cap applicator system as claimed in claim 1, wherein the powering station (P) is configured for transmitting electrical energy to the receiver (11) of each cart member (5) by means of wireless power transfer.

3. Cap applicator system as claimed in claim 1 or 2, wherein the powering station (P) comprises an energizing track (15) extending along at least part of the endless track (4),
and wherein each cart member (5) is configured to advance the respective receiver (11) along the energizing track (15) for interacting therewith and being thus energized with electrical energy.

4. Cap applicator system as claimed in any of the previous claims, wherein the powering station (P) extends at least at the receiving station (R) and/or at the application station (A).

5. Cap applicator system as claimed in any of the previous claims, wherein the powering station (P) further extends at a gluing station (G), the gluing station (G) being operatively interposed between the receiving station (R) and the application station (A);
wherein each cart member (5) is configured to convey the respective cap (2) through the gluing station (G), at which such cap (2) is spread with glue.

6. Cap applicator system as claimed in any one of the foregoing claims, wherein each cart member (5) includes a gripping unit (12) which is configured to cyclically grip at least one cap (2) at the receiving station (R), to retain such cap (2) during advancement of the cart member (5) along the endless track (15), and to release the cap (2) at the application station (A);
and wherein the electrically-powerable component (10) comprises said gripping unit (12).

7. Cap applicator system as claimed in claim 6, wherein the gripping unit (12) comprises:
- a gripper (13) for cyclically retaining a respective cap (2) between the receiving station (R) and the application station (A);
- an actuator (14) for driving a movement of the gripper (13) relatively to the respective cart member (5) during the advancement of the cart member (5) along the endless track (4);
wherein the receiver (11) is configured for powering the actuator (14) with electrical energy received from the powering station (P).

8. Cap applicator system as claimed in claim 7, wherein the actuator (14) is configured for driving:
- a movement of the gripper (13) relatively to the respective cart member (5) along a first direction (Y) parallel to the endless track (4); and/or
- a movement of the gripper (13) relatively to the respective cart member (5) along a second direction (X, Z) transversal or orthogonal to the endless track (14); and/or
- a composite motion of the above movements; and/or
- a rotation of the cap (2) about its own axis.

9. Cap applicator system as claimed in any of claims 6 to 8, wherein the gripper (13) is controllable in an open configuration, for receiving or releasing the respective cap (2), and in a closed configuration, for gripping and retaining the respective cap (2);
and wherein the gripping unit (12) comprises an actuator (14) configured for controlling the gripper (13) between the open configuration and the closed configuration.

10. Cap applicator system as claimed in claim 6, wherein the gripping unit (12) comprises:
- a vacuum pump;
- a gripper for cyclically retaining a respective cap (2) between the receiving station and the application station, the gripper having a vacuum port fluidly connectable to the vacuum pump for retaining the cap (2) by suction;
and wherein the receiver (11) is configured for powering the vacuum pump with electrical energy received from the powering station (P).

11. Cap applicator system as claimed in any one of the foregoing claims, wherein each cart member (5) includes at least one sensor (17) configured to detect a physical quantity indicative of the cap (2) received by the cart member (5) or of such cart member (5);
and wherein the electrically-powerable component (10) comprises the at least one sensor (17).

12. Cap applicator system as claimed in claim 11, wherein the receiver (11) is configured for powering the sensor (17) with electrical energy received from the powering station (P);
and wherein the sensor (17) is configured to detect one or more of the following:
- a position of the cap (2) relative to the cart member (5);
- a presence of the cap (2) on the cart member (5);
- a nominal gripping of the cap (2) by the cart member (5);
- a weight of the cap (2);
- an orientation of the cap (2);
- an acceleration of the cart member (5);
- a speed of the cart member (5).

13. Cap applicator system as claimed in any one of the foregoing claims, wherein the endless track (4) is defined by a single closed-loop rail, and wherein each cart member (5) comprises one single cart movably coupled to the closed-loop rail.

14. Cap applicator system as claimed in any one of the foregoing claims, wherein each cart member (5) includes an electrical energy storage member electrically connected with the receiver (11) and with the component (10) and configured to store electrical energy supplied from the receiver (11) and to supply the stored electrical energy to the component (10).

15. Packaging line configured for producing packages (3), comprising a packaging machine configured for forming, sealing and folding packages (3) containing a pourable product, and a cap applicator system (1) as claimed in any one of the foregoing claims and configured to receive the folded packages for applying caps (2) thereon.

16. Method for applying caps (2) onto packages (3) containing a pourable product, the method comprising the steps of:
- advancing a plurality of packages (3) through an application station (A);
- advancing a plurality of cart members (5) along an endless track (4) and through a receiving station (R) and the application station (A) by means of a linear motor, each cart member (5) including at least one electrically-powerable component (10) and a receiver (11) for receiving electrical energy and powering the component (10);
- conveying caps (2) from the receiving station (R) to the application station (A) by means of the cart members (5), respectively;
- selectively moving each cart member (5) through a powering station (P) configured for transmitting electrical energy;
- transmitting electrical energy to each receiver (11) by means of the powering station (P) and upon transiting of the respective cart member (5) through the powering station (P);
- powering the component (10) with the electrical energy received from the powering station (P).

## Patentansprüche

1. Kappenapplikatorsystem (1) zum Anbringen von Kappen (2) auf Verpackungen (3), die ein schüttfähiges Produkt enthalten, wobei das Kappenapplikatorsystem (1) umfasst:
- eine Endlosbahn (4);
- eine Vielzahl von Wagenelementen (5), die beweglich mit der Endlosbahn (4) gekoppelt sind, wobei jedes Wagenelement (5) mindestens eine elektrisch antreibbare Komponente (10) und einen Empfänger (11) aufweist, der zum Empfangen von elektrischer Energie und zum Antreiben der Komponente (10) konfiguriert ist;
- einen Linearmotor, der so konfiguriert ist, dass er die Wagenelemente (5) selektiv und unabhängig voneinander entlang der Endlosbahn (4) bewegt, wobei jedes Wagenelement (5) so konfiguriert ist, dass es zyklisch eine jeweilige Kappe (2) an einer Aufnahmestation (R) aufnimmt, diese Kappe (2) hält und entlang der Endlosbahn (2) befördert und diese Kappe (2) an einer Applikationsstation (A) auf einer jeweiligen Verpackung (3) anbringt; und
- mindestens eine Antriebsstation (P), die entlang zumindest eines Abschnitts der Endlosbahn (4) angeordnet und zum Übertragen elektrischer Energie konfiguriert ist; wobei der Linearmotor so konfiguriert ist, dass er jedes Wagenelement (5) selektiv durch die Antriebsstation (P) bewegt, wodurch der Empfänger (11) elektrische Energie von der Antriebsstation (P) empfängt, wodurch die Komponente (10) angetrieben wird.

2. Kappenapplikatorsystem nach Anspruch 1, wobei die Antriebsstation (P) so konfiguriert ist, dass sie elektrische Energie mittels drahtloser Energieübertragung an den Empfänger (11) jedes Wagenelements (5) überträgt.

3. Kappenapplikatorsystem nach Anspruch 1 oder 2, wobei die Antriebsstation (P) eine Versorgungsschiene (15) umfasst, die sich entlang zumindest eines Teils der Endlosbahn (4) erstreckt,
und wobei jedes Wagenelement (5) so konfiguriert ist, dass es den jeweiligen Empfänger (11) entlang der Antriebsschiene (15) vorwärtsbewegt, um mit dieser zu interagieren und so mit elektrischer Energie versorgt zu werden.

4. Kappenapplikatorsystem nach einem der vorhergehenden Ansprüche, wobei sich die Antriebsstation (P) zumindest an der Aufnahmestation (R) und/oder an der Applikationsstation (A) erstreckt.

5. Kappenapplikatorsystem nach einem der vorhergehenden Ansprüche, wobei sich die Antriebsstation (P) ferner an einer Klebestation (G) erstreckt, wobei die Klebestation (G) betriebsmäßig zwischen der Aufnahmestation (R) und der Applikationsstation (A) angeordnet ist;
wobei jedes Wagenelement (5) so konfiguriert ist, dass es die jeweilige Kappe (2) durch die Klebestation (G) befördert, an der diese Kappe (2) mit Klebstoff bestrichen wird.

6. Kappenapplikatorsystem nach einem der vorhergehenden Ansprüche, wobei jedes Wagenelement (5) eine Greifeinheit (12) umfasst, die so konfiguriert ist, dass sie mindestens eine Kappe (2) an der Aufnahmestation (R) zyklisch greift, um diese Kappe (2) während der Fortbewegung des Wagenelements (5) entlang der Endlosbahn (15) zu halten, und die Kappe (2) an der Applikationsstation (A) freigibt;
und wobei die elektrisch antreibbare Komponente (10) die Greifeinheit (12) umfasst.

7. Kappenapplikatorsystem nach Anspruch 6, wobei die Greifeinheit (12) umfasst:
- einen Greifer (13) zum zyklischen Halten einer jeweiligen Kappe (2) zwischen der Aufnahmestation (R) und der Applikationsstation (A);
- einen Aktuator (14) zum Antreiben einer Bewegung des Greifers (13) relativ zum jeweiligen Wagenelement (5) während der Fortbewegung des Wagenelements (5) entlang der Endlosbahn (4);
wobei der Empfänger (11) so konfiguriert ist, dass er den Aktuator (14) mit elektrischer Energie antreibt, die von der Antriebsstation (P) empfangen wird.

8. Kappenapplikatorsystem nach Anspruch 7, wobei der Aktuator (14) konfiguriert ist zum Antreiben:
- einer Bewegung des Greifers (13) relativ zum jeweiligen Wagenelement (5) entlang einer ersten Richtung (Y) parallel zu der Endlosbahn (4); und/oder
- einer Bewegung des Greifers (13) relativ zum jeweiligen Wagenelement (5) entlang einer zweiten Richtung (X, Z) quer oder orthogonal zur Endlosbahn (14); und/oder
- einer kombinierten Bewegung der vorstehend genannten Bewegungen; und/oder
- einer Drehung der Kappe (2) um ihre eigene Achse.

9. Kappenapplikatorsystem nach einem der Ansprüche 6 bis 8, wobei der Greifer (13) in einer offenen Konfiguration zum Aufnehmen oder Freigeben der jeweiligen Kappe (2) und in einer geschlossenen Konfiguration zum Greifen und Halten der jeweiligen Kappe (2) steuerbar ist;
und wobei die Greifeinheit (12) einen Aktuator (14) umfasst, der zum Steuern des Greifers (13) zwischen der offenen Konfiguration und der geschlossenen Konfiguration konfiguriert ist.

10. Kappenapplikatorsystem nach Anspruch 6, wobei die Greifeinheit (12) umfasst:
- eine Vakuumpumpe;
- einen Greifer zum zyklischen Halten einer jeweiligen Kappe (2) zwischen der Aufnahmestation und der Applikationsstation, wobei der Greifer einen Vakuumanschluss aufweist, der mit der Vakuumpumpe in Fluidverbindung bringbar ist, um die Kappe (2) durch Ansaugen zu halten;
und wobei der Empfänger (11) so konfiguriert ist, dass er die Vakuumpumpe mit elektrischer Energie antreibt, die von der Antriebsstation (P) empfangen wird.

11. Kappenapplikatorsystem nach einem der vorhergehenden Ansprüche, wobei jedes Wagenelement (5) mindestens einen Sensor (17) umfasst, der so konfiguriert ist, dass er eine physikalische Größe erfasst, die für die vom Wagenelement (5) aufgenommene Kappe (2) oder für dieses Wagenelement (5) charakteristisch ist;
und wobei die elektrisch antreibbare Komponente (10) den mindestens einen Sensor (17) umfasst.

12. Kappenapplikatorsystem nach Anspruch 11, wobei der Empfänger (11) so konfiguriert ist, dass er den Sensor (17) mit elektrischer Energie betreibt, die von der Antriebsstation (P) empfangen wird;
und wobei der Sensor (17) so konfiguriert ist, dass er eines oder mehrere der Folgenden erfasst:
- eine Position der Kappe (2) relativ zum Wagenelement (5);
- ein Vorhandensein der Kappe (2) auf dem Wagenelement (5);
- ein nominelles Greifen der Kappe (2) durch das Wagenelement (5);
- ein Gewicht der Kappe (2);
- eine Ausrichtung der Kappe (2);
- eine Beschleunigung des Wagenelements (5);
- eine Geschwindigkeit des Wagenelements (5).

13. Kappenapplikatorsystem nach einem der vorhergehenden Ansprüche, wobei die Endlosbahn (4) durch eine einzige geschlossene Schiene definiert ist und wobei jedes Wagenelement (5) einen einzelnen Wagen umfasst, der beweglich mit der geschlossenen Schiene gekoppelt ist.

14. Kappenapplikatorsystem nach einem der vorhergehenden Ansprüche, wobei jedes Wagenelement (5) ein Speicherelement für elektrische Energie umfasst, das elektrisch mit dem Empfänger (11) und mit der Komponente (10) verbunden ist und so konfiguriert ist, dass es vom Empfänger (11) gelieferte elektrische Energie speichert und die gespeicherte elektrische Energie an die Komponente (10) liefert.

15. Verpackungslinie zur Herstellung von Verpackungen (3), umfassend eine Verpackungsmaschine zum Bilden, Verschließen und Falten von Verpackungen (3), die ein schüttfähiges Produkt enthalten, und ein Kappenapplikatorsystem (1) nach einem der vorhergehenden Ansprüche, das so konfiguriert ist, dass es die gefalteten Verpackungen aufnimmt, um Kappen (2) darauf aufzubringen.

16. Verfahren zum Anbringen von Kappen (2) auf Verpackungen (3), die ein schüttfähiges Produkt enthalten, wobei das Verfahren die folgenden Schritte umfasst:
- Bewegen einer Vielzahl von Verpackungen (3) durch eine Applikationsstation (A);
- Bewegen einer Vielzahl von Wagenelementen (5) entlang einer Endlosbahn (4) und durch eine Aufnahmestation (R) und die Applikationsstation (A) mittels eines Linearmotors, wobei jedes Wagenelement (5) mindestens eine elektrisch antreibbare Komponente (10) und einen Empfänger (11) zum Empfangen elektrischer Energie und zum Antreiben der Komponente (10) umfasst;
- Befördern von Kappen (2) von der Aufnahmestation (R) zur Applikationsstation (A) jeweils mittels der Wagenelemente (5);
- selektives Bewegen jedes Wagenelements (5) durch eine Antriebsstation (P), die zum Übertragen elektrischer Energie konfiguriert ist;
- Übertragen von elektrischer Energie an jeden Empfänger (11) mittels der Antriebsstation (P) und bei Durchlaufen des jeweiligen Wagenelements (5) durch die Antriebsstation (P);
- Antreiben der Komponente (10) mit der von der Antriebsstation (P) empfangenen elektrischen Energie.

## Revendications

1. Système applicateur de bouchons (1) pour appliquer des bouchons (2) sur des emballages (3) contenant un produit fluide, le système applicateur de bouchons (1) comprenant :
- une voie sans fin (4) ;
- une pluralité d'éléments chariots (5) couplés de manière mobile à la voie sans fin (4), chaque élément chariot (5) ayant au moins un composant alimenté électriquement (10) et un récepteur (11) configuré pour recevoir de l'énergie électrique et alimenter le composant (10) ;
- un moteur linéaire configuré pour déplacer les éléments chariots (5) sélectivement et indépendamment les uns des autres le long de la voie sans fin (4), chaque élément chariot (5) étant configuré pour recevoir cycliquement un bouchon (2) respectif au niveau d'une station de réception (R), pour retenir et transporter un tel bouchon (2) le long de la voie sans fin (2), et pour appliquer un tel bouchon (2) sur un emballage (3) respectif au niveau d'une station d'application (A) ; et
- au moins une station d'alimentation (P) agencée le long d'au moins une partie de la voie sans fin (4) et configurée pour transmettre de l'énergie électrique ; dans lequel le moteur linéaire est configuré pour déplacer sélectivement chaque élément chariot (5) à travers la station d'alimentation (P), moyennant quoi le récepteur (11) reçoit de l'énergie électrique de la station d'alimentation (P) alimentant ainsi le composant (10).

2. Système applicateur de bouchons selon la revendication 1, dans lequel la station d'alimentation (P) est configurée pour transmettre de l'énergie électrique au récepteur (11) de chaque élément chariot (5) au moyen d'un transfert d'énergie sans fil.

3. Système applicateur de bouchons selon la revendication 1 ou 2, dans lequel la station d'alimentation (P) comprend une voie d'alimentation (15) s'étendant le long d'au moins une partie de la voie sans fin (4),
et dans lequel chaque élément chariot (5) est configuré pour faire avancer le récepteur (11) respectif le long de la voie d'alimentation (15) pour interagir avec lui et être ainsi alimenté en énergie électrique.

4. Système applicateur de bouchons selon l'une quelconque des revendications précédentes, dans lequel la station d'alimentation (P) s'étend au moins au niveau de la station de réception (R) et/ou au niveau de la station d'application (A).

5. Système applicateur de bouchons selon l'une quelconque des revendications précédentes, dans lequel la station d'alimentation (P) s'étend en outre au niveau d'une station d'encollage (G), la station d'encollage (G) étant interposée de manière opérationnelle entre la station de réception (R) et la station d'application (A) ;
dans lequel chaque élément chariot (5) est configuré pour transporter le bouchon (2) respectif à travers la station d'encollage (G), au niveau de laquelle un tel bouchon (2) est enduit de colle.

6. Système applicateur de bouchons selon l'une quelconque des revendications précédentes, dans lequel chaque élément chariot (5) inclut une unité de préhension (12) qui est configurée pour saisir cycliquement au moins un bouchon (2) au niveau de la station de réception (R), pour retenir un tel bouchon (2) pendant l'avancement de l'élément chariot (5) le long de la voie sans fin (15), et pour libérer le bouchon (2) au niveau de la station d'application (A) ;
et dans lequel le composant alimenté électriquement (10) comprend ladite unité de préhension (12).

7. Système applicateur de bouchons selon la revendication 6, dans lequel l'unité de préhension (12) comprend :
- une pince (13) pour retenir cycliquement un bouchon respectif (2) entre la station de réception (R) et la station d'application (A) ;
- un actionneur (14) pour entraîner un déplacement de la pince (13) par rapport à l'élément chariot (5) respectif pendant l'avancement de l'élément chariot (5) le long de la voie sans fin (4) ;
dans lequel le récepteur (11) est configuré pour alimenter l'actionneur (14) en énergie électrique reçue de la station d'alimentation (P).

8. Système applicateur de bouchons selon la revendication 7, dans lequel l'actionneur (14) est configuré pour entraîner :
- un déplacement de la pince (13) par rapport à l'élément chariot (5) respectif le long d'une première direction (Y) parallèle à la voie sans fin (4) ; et/ou
- un déplacement de la pince (13) par rapport à l'élément chariot (5) respectif le long d'une seconde direction (X, Z) transversale ou orthogonale à la voie sans fin (14) ; et/ou
- un mouvement composé des déplacements ci-dessus ; et/ou
- une rotation du bouchon (2) autour de son propre axe.

9. Système applicateur de bouchons selon l'une quelconque des revendications 6 à 8, dans lequel la pince (13) peut être commandée dans une configuration ouverte, pour recevoir ou libérer le bouchon (2) respectif, et dans une configuration fermée, pour saisir et retenir le bouchon (2) respectif ;
et dans lequel l'unité de préhension (12) comprend un actionneur (14) configuré pour commander la pince (13) entre la configuration ouverte et la configuration fermée.

10. Système applicateur de bouchons selon la revendication 6, dans lequel l'unité de préhension (12) comprend :
- une pompe à vide ;
- une pince pour retenir cycliquement un bouchon (2) respectif entre la station de réception et la station d'application, la pince ayant un port à vide pouvant être relié fluidiquement à la pompe à vide pour retenir le bouchon (2) par aspiration ;
et dans lequel le récepteur (11) est configuré pour alimenter la pompe à vide en énergie électrique reçue de la station d'alimentation (P).

11. Système applicateur de bouchons selon l'une quelconque des revendications précédentes, dans lequel chaque élément chariot (5) inclut au moins un capteur (17) configuré pour détecter une quantité physique indicative du bouchon (2) reçue par l'élément chariot (5) ou d'un tel élément chariot (5) ;
et dans lequel le composant alimenté électriquement (10) comprend l'au moins un capteur (17).

12. Système applicateur de bouchons selon la revendication 11, dans lequel le récepteur (11) est configuré pour alimenter le capteur (17) en énergie électrique reçue de la station d'alimentation (P) ;
et dans lequel le capteur (17) est configuré pour détecter l'un ou plusieurs de ce qui suit :
- une position du bouchon (2) par rapport à l'élément chariot (5) ;
- une présence du bouchon (2) sur l'élément chariot (5) ;
- une préhension nominale du bouchon (2) par l'élément chariot (5) ;
- un poids du bouchon (2) ;
- une orientation du bouchon (2) ;
- une accélération de l'élément chariot (5) ;
- une vitesse de l'élément chariot (5).

13. Système applicateur de bouchons selon l'une quelconque des revendications précédentes, dans lequel la voie sans fin (4) est définie par un seul rail en boucle fermée, et dans lequel chaque élément chariot (5) comprend un seul chariot couplé de manière mobile au rail en boucle fermée.

14. Système applicateur de bouchons selon l'une quelconque des revendications précédentes, dans lequel chaque élément chariot (5) inclut un élément de stockage d'énergie électrique relié électriquement au récepteur (11) et au composant (10) et configuré pour stocker de l'énergie électrique fournie par le récepteur (11) et pour fournir l'énergie électrique stockée au composant (10).

15. Ligne d'emballage configurée pour produire des emballages (3), comprenant une machine d'emballage configurée pour former, sceller et plier des emballages (3) contenant un produit fluide, et un système applicateur de bouchons (1) selon l'une quelconque des revendications précédentes et configuré pour recevoir les emballages pliés pour appliquer des bouchons (2) sur ceux-ci.

16. Procédé d'application de bouchons (2) sur des emballages (3) contenant un produit fluide, le procédé comprenant les étapes suivantes :
- l'avancement d'une pluralité d'emballages (3) à travers une station d'application (A) ;
- l'avancement d'une pluralité d'éléments chariots (5) le long d'une voie sans fin (4) et à travers une station de réception (R) et la station d'application (A) au moyen d'un moteur linéaire, chaque élément chariot (5) incluant au moins un composant alimenté électriquement (10) et un récepteur (11) pour recevoir de l'énergie électrique et alimenter le composant (10) ;
- l'acheminement de bouchons (2) de la station de réception (R) à la station d'application (A) au moyen des éléments chariots (5), respectivement ;
- le déplacement de manière sélective de chaque élément chariot (5) à travers une station d'alimentation (P) configurée pour transmettre de l'énergie électrique ;
- la transmission d'énergie électrique à chaque récepteur (11) au moyen de la station d'alimentation (P) et lors du transit de l'élément chariot (5) respectif à travers la station d'alimentation (P) ;
- l'alimentation du composant (10) en énergie électrique reçue de la station d'alimentation (P).
